# EUROPÄISCHE PATENTSCHRIFT

(11) **EP 2 873 328 B1**
(45) Veröffentlichungstag und Bekanntmachung des Hinweises auf die Patenterteilung: **28.10.2020**
(21) Anmeldenummer: 13193225.3
(22) Anmeldetag: 17.11.2013
(51) Int. Cl.: A21D 13/41, A21D 13/28, A23C 9/13, A23C 19/076, A23C 19/09, A23L 29/212, A23L 27/60, A23L 23/00, A23C 9/137, A23C 13/16

(54) **Verfahren zur Herstellung von Tiefkühlpizza belegt mit gesäuertem Milcherzeugnis mit guten Backeigenschaften und hoher Gefrier-Tau-Stabilität**
Process for the preparation of frozen pizza topped with acidified milk product with good baking properties and high freeze-thaw stability
Procédé de fabrication d'une pizza surgelée garnie d'un produit laitier acidifié ayant de bonnes propriétés de cuisson et une grande stabilité à la congélation-décongélation

(43) Veröffentlichungstag der Anmeldung: 20.05.2015
(73) Patentinhaber: DMK Deutsches Milchkontor GmbH, 27404 Zeven (DE)
(72) Erfinder: Borcherding, Katja, 21279 Hollenstedt (DE); Hoch, Matthias, 27404 Zeven (DE); Bärwinkel, Ralf, 26919 Brake (DE)
(74) Vertreter: Fabry, Bernd

(56) Entgegenhaltungen:
- WO-A1-99/57996
- DE-A1- 3 324 822
- US-A- 3 729 322
- US-A1- 2008 089 978
- DATABASE GNPD [Online] MINTEL; November 2010 (2010-11), "Tarte Flambés Baking Set", XP002722235, Database accession no. 1431343

## Beschreibung

### GEBIET DER ERFINDUNG

Die Erfindung befindet sich auf dem Gebiet Milchprodukte und betrifft ein Verfahren zur Herstellung von Tiefkühlpizza.

### STAND DER TECHNIK

Sauce oder Soße ist eine flüssig bis sämig gebundene, würzende Beigabe zu warmen und kalten Speisen, Salaten und Desserts. Es gibt eine Reihe von Grundsaucen, wie beispielsweise die Sauce Espagnoe (eine gebundene Sauce auf der Basis eines dunklen Fonds) oder Sauce Veloute (auch Weiße Grundsauce), eine mit heller Roux (Mehlschwitze) gebundene Sauce auf der Basis eines hellen Fonds oder Bechamel und Hollandaise Sauce. Auch die Tomatensauce wird oft zu den Grundsaucen gezählt.

Tomatensauce ist eine einfache, auf gekochten, passierten Tomaten basierende Sauce aus der italienischen Küche, die die Grundlage vieler Gerichte wie z. B. Spaghetti alla napoletana bildet. Sie wurde vermutlich im 18. Jahrhundert in Süditalien erfunden, als erste rote, große Zuchtformen der Tomate Verbreitung fanden. Die einfachste Form besteht lediglich aus durch Kochen eingedickten Tomaten, die durch ein Sieb gestrichen und so von Kernen und Haut befreit werden. Sie wird üblicherweise durch Einkochen konserviert und später je nach Rezept weiterverarbeitet. Eine übliche italienische Tomatensauce (Salsa di pomodoro) enthält zusätzlich Würzgemüse wie Karotte, Bleichsellerie, Zwiebel und Knoblauch, die, bevor die Tomaten hinzugefügt werden, in Öl angedünstet wurden. Die bis zur gewünschten Konsistenz gekochte Sauce wird wieder passiert, mit Salz und Pfeffer, eventuell auch etwas Weinessig und Zucker abgeschmeckt und zum Schluss mit Olivenöl vollendet. Häufig wird sie noch mit Kräutern wie Basilikum, Oregano, Lorbeer usw. gewürzt. Daneben gibt es zahllose Abwandlungen und Ergänzungen mit meist würzigen Zutaten, wie Oliven, Sardellen, Kapern, Peperonicini oder getrockneten Pilzen.

Für Tomatensauce der klassischen Küche (Sauce tomate) werden Bauchspeck, Wurzelgemüse und Zwiebeln fein gewürfelt mit Thymian, Basilikum und Lorbeer in Butter angeröstet, mit Mehl überstäubt, nach kurzem Weiterrösten mit Fleischbrühe oder Fischfond aufgefüllt, mit Tomatenpüree oder -mark ergänzt und schließlich passiert. Sie wird zu gebratenem Fleisch oder zu Fisch und Meeresfrüchten serviert bzw. als Grundsauce nach Rezept weiterverarbeitet.

Die genannte Grundsauce auf Tomatenbasis ist zumeist auch der Grundbelag auf Pizzateig. Die Grundbelagsauce auf Pizza ist, bis auf einigen Ausnahmen, wie auf Flammkuchen, bei der der Grundbelag Creme fraiche, Sauerrahm oder Schmand ist, ausschließlich auf Tomatenbasis. Die Tomatensauce ist eine sehr würzige Soße, bei der der tomatiger Grundgeschmack überwiegt und sehr stark im Vordergrund steht. Der tomatige Geschmack überdeckt zumeist die gustatorische Wahrnehmung für die weiteren Gewürze in der Tomatensauce, die eine feinere Note aufweisen.

Der vorliegenden Offenbarung lag daher die Aufgabe zugrunde, eine Soße bzw. Grundsauce, als Alternative zu der Tomatensauce bereitzustellen, welche die vorgenannten Nachteile bei der geschmacklichen Wahrnehmung vermeidet. Weiterhin sollte die Soße bzw. Grundsauce die würzigen Geschmacksnoten der weiteren Zutaten in der Soße unterstützen. Die Soße bzw. Grundsauce sollte als Grundbelagsauce auf Pizzateig einsetzbar sein, wobei die Pizza eine Tiefkühlpizza ist. Daher war es eine weitere Aufgabe der Offenbarung, eine Soße bzw. Grundsauce bereitzustellen, die glatt ist und eine gute Fließfähigkeit aufweist, damit sie sich auch bei der Herstellung von Tiefkühlpizza maschinell schnell und einfach auf den Teig aufbringen lässt. Eine solche Soße bzw. Grundsauce sollte daher eine stabile Back- und Gefrier-Tau-Stabiliät aufweisen.

### BESCHREIBUNG DER ERFINDUNG

Gegenstand der Erfindung ist ein Verfahren zur Herstellung von Tiefkühlpizza, wobei im ersten Schritt
(i) der Teig bereitgestellt wird, und dann
(ii) ein gesäuertes Milcherzeugnis aus:
   (a) 30 bis 80 Gew.% Milch,
   (b) 5 bis 80 Gew.% Sahne,
   (c) 0.5 bis 4 Gew.% Stärke und
   (d) 0.001 bis 0.1 Gew.-% mesophile Milchsäurebakterien und/oder thermophile Milchsäurebakterien,
      mit der Maßgabe, dass sich die Komponenten (a) bis (d) zu 100 Gew.% addieren, auf den fertigen Teig aufgebracht wird, und das gesäuerte Milcherzeugnis dadurch erhältlich ist, dass man
      (1) Milch, Sahne und Stärke in einem Mischer rührt, die Mischung auf 50 °C bis 95 °C erwärmt und unter Druck homogenisiert, wobei der Homogenisierungsschritt eine 2-stufige Homogenisierung ist, wobei die erste Stufe bei einem Druck von 15 bis 30 bar und die zweite Stufe bei einem Druck von 2 bis 10 bar durchführt wird, und anschließend auf 80 °C bis 120 °C und eine Heißhaltezeit von 300 bis 500 Sekunden erhitzt,
      (2) die so erhaltene Mischung nach Abkühlen auf 30°C bis 50°C mit Milchsäurekulturen beimpft und bei einem geeigneten Temperaturbereich bebrütet bis ein pH-Wert < 4,6 erreicht wird, wobei als Milchsäurekulturen mesophile und / oder thermophile Milchsäurekulturen eingesetzt werden und die so erhaltene gesäuerte Milchgrundmasse nicht mehr als 20% Gesamtfettgehalt aufweist,
   und dann
(iii) der Teig mit dem gesäuerten Milcherzeugnis im Backofen vorgebacken wird, und anschließend
(iv) optional mit weiteren Zutaten belegt und
(v) schockgefroren wird.

Überraschenderweise wurde gefunden, dass durch die Verwendung des erfindungsgemäßen gesäuerten Milcherzeugnisses, eine geschmacklich signifikant verbesserte Zubereitung erhalten wird, die zwar einen leicht säuerlichen Geschmack aufweist, jedoch abhängig von den weiteren Gewürzzugaben einen runden, wohlschmeckenden Gesamteindruck hinterlässt. Insbesondere weist das erfindungsgemäße gesäuerte Milcherzeugnis keine tomatige Geschmacksnote auf, die zu stark in den Vordergrund steht und alle weiteren Geschmacksnoten überdeckt.

Bevorzugt wird als Komponente (a) Magermilch genommen.

Als Stärke wird in dem gesäuerten Milcherzeugnis bevorzugt native und/oder modifizierte Stärke eingesetzt. Vorzugsweise ist die Stärke ausgewählt aus Mais-, Weizen- oder Kartoffelstärke oder den nativen Stärken lebensmittelrechtlich gleichgestellten Stärken, den sog. physikalisch modifizierte Stärke, welche vorgekocht wird.

Besonders bevorzugt wird als Stärke, native Stärke eingesetzt, da diese im Gegensatz zu der physikalischen modifizierten Stärke, natürlich vorkommen und nicht, wie letzteres als Lebensmittelzusatzstoffe deklariert werden.

Physikalisch modifizierte Stärke sind bevorzugt ausgewählt aus der Gruppe bestehend aus:
- (E 1400) Dextrin
- (E 1401) säurebehandelte (modifizierte) Stärke
- (E 1402) Alkalisch modifizierte Stärke
- (E 1403) Gebleichte Stärke
- (E 1404) Oxidierte Stärke (oxidativ abgebaute Stärke)
- (E 1405) Enzymatisch modifizierte Stärke
- (E 1410) Monostärkephosphat
- (E 1412) Distärkephosphat
- (E 1413) Phosphatiertes Distärkephosphat
- (E 1414) Acetyliertes Distärkephosphat
- (E 1420) Acetylierte Stärke
- (E 1421) Acetylierte Stärke
- (E 1422) Acetyliertes Distärkeadipat
- (E 1423) Acetyliertes Distärkeglycerin
- (E 1430) Distärkeglycerin
- (E 1440) Hydroxypropylstärke
- (E 1441) Hydroxypropyldistärkeglycerin
- (E 1442) Hydroxypropyldistärkephosphat
- (E 1450) Stärkenatriumoctenylsuccinat (emulgierende Stärke)
- E( 1451) Acetylierte oxidierte Stärke.

Als mesophile Bakterium geeignet sind Bakterienkulturen, welche unabhängig ausgewählt werden kann aus der Gruppe bestehend aus: *Lactococcus* spp., *Leuconostoc* spp., *Lactococcus lactis, Lactococcus lactis* subspecies *cremoris* und *Lactococcus lactis* subspecies *lactis.* Insbesondere bevorzugte mesophile Starterkulturen sind Kulturenspezies, welche unabhängig ausgewählt werden können aus der Gruppe bestehend aus: *Lactococcus lactis subsp. lactis, Lactococcus lactis subsp. cremoris, Leuconostoc spec., Lactococcus lactis subsp. lactis biovar diacetylactis, Lactococcus lactis subsp. lactis biovar diacetylactis.*

Bei dem thermophilen Bakterium können diese unabhängig ausgewählt werden aus der Gruppe bestehend aus *Streptococcus* spp., *Bifidobacteriumspp., Pediococcusspp., Lactobacillus* spp., *Streptococcus thermophilus, Lactobacillus debrueckii* oder *Lactobacillus debrueckii* subspecies *bulgaricus.* Insbesondere bevorzugte thermophile Starterkulturen können unabhängig ausgewählt werden aus der Gruppe bestehend aus: *Sc*. *thermophilus, Lb. delbrueckii subsp. Bulgaricus, Sc. thermophilus, Lb. Acidophilus, Lactobacillus rhamnosus, Bifidobacterium ssp., Lactobacillus johnsonii, Lactobacillus casei, Lactobacillus paracasei.* Insbesondere bevorzugt sind thermophile Milchsäurekulturen von Fa. Chr. Hansen, wie beispielsweise YoFlex® Kulturensortiment oder eXact®-Sortiment, aber auch Bakterienkulturen wie YoMix (Fa. Danisco) oder Delvo®-Yog (Fa. DSM) sind geeignet.

Das Wirkungsoptimum von mesophilen Milchsäurebakterien ist vorzugsweise bei einer Fermentationstemperatur von 23°C bis 34 °C und bei thermophilen Milchsäurebakterien bei 35°C bis 45 °C. Geschmacksgebende Substanzen bestimmen die Geschmacksrichtung der Endzusammensetzung, welche ausgewählt ist aus würzig, käsig, scharf, umami, herzhaft, exotisch, bitter, salzig, säuerlich und / oder süß.

Hierbei ist unter den Begriff "geschmacksgebende Substanzen" die in der Beschreibung weiter unten aufgeführte Inhaltstoffe zu verstehen, die einen geschmacklichen Einfluss auf die Zubereitung und Endzusammensetzung haben. Insbesondere fällt unter den Begriff "geschmacksgebende Substanzen" Inhaltstoffe, wie Kräutermischungen, Gewürze und Zusatzstoffe, wie Aromastoffe.

Das erfindungsgemäße gesäuerte Milcherzeugnis enthält keine Tomatengrundsauce. D.h., sie enthält keine Inhaltstoffe auf Tomatenbasis, welche als Tomatengrundsauce eingesetzt wird, so dass der Tomatengeschmack überwiegt und die weiteren Geschmacksnoten wie oben beschrieben überdeckt werden. Die Zugabe von tomatigen Gewürzen, welche der Zubereitung eine leichte tomatige Note gibt, wird dadurch nicht ausgeschlossen.

Das gesäuerte Milcherzeugnis weist eine sehr gute Back- und Gefrier- Taustabilität auf. Die Zubereitung zeigt in der Anwendung in oder auf Tiefkühlprodukten keine grisselige und gebrochene Struktur auf. Sie ist cremig, massig und fest und unterstützt die Geschmacksnoten weiterer Zutaten besonders gut. Daher wird sie für die Herstellung als Belagsauce auf Tiefkühlpizza verwendet.

Ein großer Vorteil des gesäuerten Milcherzeugnisses ist auch der positive ernährungsphysiologische Beitrag der gesäuerten Milch auf die Verdauung, bedingt durch die Milchsäure. Zudem schmecken gesäuerte Milcherzeugnisse angenehm frisch und sind sehr bekömmlich, da das Milcheiweiß in gespaltener Form vorliegt, so dass die Mineralstoffe der Milch besser vom Körper aufgenommen werden können.

Hierbei zeigt sich, dass das gesäuerte Milcherzeugnis nicht nur einen geschmacklichen Vorteil aufweist, im Vergleich zu der sehr stark schmeckenden Tomatengrundsauce, sondern auch eine gute Back- und Gefrier-Taustabilität aufweist, so dass diese gut einsetzbar ist auf Tiefkühlpizza.

Bei der Herstellung des gesäuerten Milcherzeugnises werden Milch, Sahne und Stärke in einem Mischbehälter gegeben und gerührt. Anschließend wird auf ca. 50°C bis 95°C, vorzugsweise 55°C bis 75°C, besonders bevorzugt 65°C bis 70°C erwärmt und in der ersten Stufe bei 15 bis 30 bar und in der zweiten Stufe bei 2 bis 10 bar, vorzugsweise 5 bis 7 bar homogenisiert. Es wird dann auf 80°C bis 120°C erhitzt, bevorzugt 90°C bis 110°C, besonders bevorzugt 95°C bis 100°C, und die Heißhaltezeit beträgt 300s bis 500s, bevorzugt 340s bis 450s, besonders bevorzugt 360s bis 400s. Anschließend wird auf 30°C bis 50 °C, bevorzugt 35°C bis 45°C, besonders bevorzugt 30°C bis 40 °C abgekühlt. Das Gemisch wird dann mit Milchsäurekulturen geimpft und im Wärmeschrank, bevorzugt bei einer Temperatur von 30°C bis 45 °C für 24 Stunden gebrütet bis die gesäuerte Milchbasis erhalten wird.

Das gesäuerte Milcherzeugnis ist dadurch erhältlich, dass man
(i) Milch und Sahne und Stärke in einem Mischer rührt, die Mischung auf 50 °C bis 95 °C erwärmt und unter Druck homogenisiert, wobei der Homogenisierungsschritt eine 2-stufige Homogenisierung ist, wobei die erste Stufe bei einem Druck von 15 bis 30 bar und die zweite Stufe bei einem Druck von 2 bis 10 bar durchführt wird, und anschließend auf 80 °C bis 120 °C und eine Heißhaltezeit von 300 bis 500 Sekunden erhitzt,
(ii) die so erhaltene Mischung nach Abkühlung auf 30°C bis 50°C mit Milchsäurekulturen beimpft und
(iii) bei einem geeigneten Temperaturbereich bebrütet bis ein pH-Wert < 4,6 erreicht wird,
(iv) wobei als Milchsäurekulturen mesophile und / oder thermophile Milchsäurekulturen eingesetzt werden und die so erhaltene gesäuerte Milchgrundmasse nicht mehr als 20 % Gesamtfettgehalt, bevorzugt nicht mehr als 10% Gesamtfettgehalt aufweist.

Ein Gegenstand der vorliegenden Erfindung ist ein Verfahren zur Herstellung von Tiefkühlpizza gemäß Anspruch 1 mit dem oben geannten gesäuerten Milcherzeugnis als Grundbelagsauce. Hierbei wird Pizzateig bereitgestellt, indem der Teig beispielsweise in einem geschlossenen Behälter maschinell angerührt, geknetet und portioniert. Anschließend wird der Teig gereift und in einem nächsten Arbeitsschritt in Backformen gepresst oder ausgestanzt. Vor dem Backen wird die erfindungsgemäße Sauermilch basierende Zubereitung aufgebracht. Die vorbereiteten Böden fahren dann im Blech durch den Ofen und werden bei rund 370°C kurz gebacken. Nach dem Vorbacken kann die Pizza dann mit weiteren Zutaten und Käse belegt werden, bevor sie schockgefrostet wird.

Erfindungsgemäß wird im ersten Schritt
(i) der Teig bereitgestellt wird, und dann
(ii) das erfindungsgemäße gesäuerte Milcherzeugnis auf den fertigen Teig aufgebracht , und dann
(iii) der Teig mit der Sauce im Backofen vorgebacken, und anschließend
(iv) optional mit weiteren Zutaten belegt und
(v) schockgefroren.

Die weiteren Zutaten können hierbei Knoblauch, Zwiebel und weiteres Gemüse, sowie andere essbare Nahrungsmittel sein.

### Herstellung von Sahne

Sahne, Obers oder Rahm entsteht durch Aufrahmen der Milch. Hierbei entmischt sich die Milch, indem die emulgierten Milchfett-Emulsionstropfen aufgrund der geringeren Dichte an die Oberfläche steigen und dort als Rahm aufschwimmen, der als solcher abgeschöpft werden kann, Magermilch setzt sich als schwerere Phase unten ab. Voraussetzung des natürlichen Aufrahmens ist, dass die Milch nicht homogenisiert wurde, da hierdurch die Fettkügelchen zerkleinert und neu strukturiert werden, was das Aufrahmen verlangsamt. In der Regel wird Rahm heute nicht mehr durch Aufrahmen, sondern durch Zentrifugieren gewonnen. Hierbei wird das Milchfett so weit wie möglich abgetrennt, so dass die verbleibende Magermilch nur noch einen Fettgehalt von 0,01% bis 0,06% hat. Der gewünschte Fettgehalt des Enderzeugnisses wird durch Rückmischung beider Erzeugnisse erreicht. Waren, die die Bezeichnung Sahne (Rahm) tragen, müssen einen Mindestfettgehalt von 10 % aufweisen.

Sahne enthält gegenüber Milch weniger Milcheiweiß, dafür mehr Fett und fettlösliche Vitamine. Sie ist Ausgangserzeugnis für die Butter- und Käseherstellung, wird aber auch "süß" oder gesäuert frisch in der Küche verwendet.

### Nahrungsmittelinhaltsstoffe

### A. Kräuterzubereitung/Gewürze

Die Art der Kräuter, die in der erfindungsgemäßen Zubereitung und Endzusammensetzung enthalten sind, ist nicht begrenzt. Darüber hinaus kann die Kräuterzubereitung bzw. Gewürze auch Salz, Zucker, Knoblauch und Zwiebel enthalten.

Es können beispielsweise Kräuter und Gewürze wie Bärlauch, Basilikum, Beifuß, Bohnenkraut, Borretsch, Brunnenkresse, Dill, Estragon, Kerbel, Kresse, Liebstöckel, Majoran, Melisse, Minze, Oregano, Paprika, Petersilie, getrocknete Tomatenpulver, Pfeffer, Pimpinelle, Rosmarin, Salbei, Sauerampfer, Schnittlauch, Thymian, Ysop, einzeln oder in beliebigen Kombinationen, enthalten sein. Es können weiterhin sogenannte indische, asiatische oder exotische Kräuter und Gewürze eingesetzt werden. Diese können beispielsweise Koriander, Cardamom, Ingwer, Safran, Zitronengras, Zitronengras, Curry, Chili, Gewürznelke. Es können im Grunde jede Art von verzehrbaren Kräutern eingearbeitet werden.

Die Kräuter können in beliebiger Form zugegeben werden. Sie können z.B. in gehackter, klein geschnittener Form, als Extrakt, in frischer Form oder in getrockneter, gefrorener oder wärmebehandelter Form enthalten sein.

In einer ersten Ausgestaltungsform enthalten die Zubereitungen Kräuter in Form von fein gehackten frischen Kräutern. Alternativ kann auch eine wässrige Kräuterpaste eingesetzt werden, die vorzugsweise einen Wasseranteil von etwa 50 bis etwa 85 Gew.-% enthält.

Es hat sich als vorteilhaft erwiesen, eine vorgefertigte Kräuterpaste mit einem Wassergehalt von ca. 20 bis 85 Gew.-% und einer Trockenmasse von 25 bis 85 Gew.-%, vorzugsweise beispielsweise 55 Gew.-% Wassergehalt und eine Trockenmasse von etwa 45 Gew.-% einzusetzen. Die Kräuterpaste kann je nach Bedarf unterschiedliche frische, gefrorene oder getrocknete Kräuter und/oder Gewürze enthalten. In einer bevorzugten Ausführungsform enthält die Kräuterpaste unter anderem beispielsweise Kräuter, Salz, Gewürze, Knoblauch und Zwiebeln.

### B. Pflanzenfette und Pflanzenöle

Wie oben erläutert, stellt die Mitverwendung von Pflanzenfetten oder Pflanzenölen kein Erfordernis für die erfindungsgemäßen Zubereitungen dar. Es kann jedoch in ausgewählten Fällen von Vorteil sein, geringe Mengen bis zu 5 Gew.-% bezogen auf die Zubereitung dieser Stoffe mitzuverwenden.

Pflanzenfette verleihen der Kräuterzubereitung eine höhere Formstabilität bei Raumtemperatur. Sie dienen als Matrix für die Zusammensetzung. Geeignet sind hierfür insbesondere natürliche pflanzliche Fette wie z.B. gehärtetes Palmöl oder Kokosfett. Umgekehrt begünstigen Pflanzenöle der Zusammensetzung eine noch niedrigere Viskosität und unterstützen die Formbarkeit bei Kühlschranktemperaturen. Beispiele hierfür sind Rapsöl, Sonnenblumenöl, Maiskeimöl und Olivenöl.

### C. Aromastoffe

Die erfindungsgemäßen Zubereitungen können einen oder mehrere Aromastoffe enthalten. Typische Beispiele umfassen: Acetophenon, Allylcapronat, alpha-lonon, beta-lonon, Anisaldehyd, Anisylacetat, Anisylformiat, Benzaldehyd, Benzothiazol, Benzylacetat, Benzylalkohol, Benzylbenzoat, beta-lonon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### D. Säuerungsmittel und Antioxidantien.

Auch diese Stoffe müssen innerhalb der EU der LebensmittelzulassungsVO genügen. Als Säuerungsmittel bzw. Antioxidantien kommen demnach in Betracht:
- E 300: Ascorbinsäure
- E 301: Natriumascorbat
- E 302: Calciumascorbat
- E 304: Ascorbylpalmitat/Ascorbylstearat
- E 306: Tocopherolhaltige Extrakte
- E 307: Alpha-Tocopherol
- E 308: Gamma-Tocopherol
- E 309: Delta-Tocopherol
- E 310: Propylgallat
- E 311: Octylgallat
- E 312: Dodecylgallat
- E 315: Isoascorbinsäure
- E 316: Natriumisoascorbat
- E 319: tert.-Butylhydrochinon
- E 320: Butylhydroxyanisol (BHA)
- E 321: Butylhydroxytoluol (BHT)
- E 322: Lecithin
- E 325: Natriumlactat
- E 326: Kaliumlactat
- E 327: Calciumlactat
- E 330: Zitronensäure
- E 331: Mono-/Di-/Trinatriumcitrat
- E 332: Monokaliumcitrat, trikaliumcitrat
- E 333: Monocalciumcitrat, Dicalciumcitrat, Tricalciumcitrat
- E 334: L-(+)-Weinsäure
- E 335: Mononatriumtartrat, Dinatriumtartrat
- E 336: Monokaliumtartrat, Dikaliumtartrat
- E 337: Kaliumnatriumtartrat
- E 338: Phosphorsäure
- E 339: Mononatriumphosphat, Dinatriumphosphat, Trinatriumphosphat
- E 340: Monokaliumphosphat, Dikaliumphosphat, Trikaliumphosphat
- E 341: Monocalciumphosphat, Dicalciumphosphat, Tricalciumphosphat
- E 343: Magnesiumphosphate
- E 350: Natriumhydrogenmalat, Natriummalat
- E 351: Kaliummalat
- E 352: Calciummalat, Calciumhydrogenmalat
- E 353: Metaweinsäure
- E 354: Calciumtartrat
- E 355: Adipinsäure
- E 356: Natriumadipat
- E 357: Kaliumadipat
- E 363: Bernsteinsäure
- E 380: Ammoniumcitrat
- E 385: Cacliumdinatriummethylendiamintetrahydrat
- E 392: Rosmarinextrakt

### E. Säureregulatoren

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170: - Calciumcarbonat
- E 260-263: - Essigsäure und Acetate
- E 270: - Milchsäure
- E 296: - Äpfelsäure
- E 297: - Fumarsäure
- E 325-327: - Lactate (Milchsäure)
- E 330-333: - Citronensäure und Citrate
- E 334-337: - Weinsäure und Tartrate
- E 339-341: - Orthophosphate
- E 350-352: - Malate (Äpfelsäure)
- E 450-452: - Di-, Tri- und Polyphosphate
- E 500-504: - Carbonate (Kohlensäure)
- E 507: - Salzsäure und ChlorideE 513-517Schwefelsäure und Sulfate
- E 524-528: - Hydroxide
- E 529-530: - Oxide
- E 355-357: - Adipinsäure und Adipate
- E 574-578: - Gluconsäure und Gluconate

### F. Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO2-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400: - Alginsäure
- E 401: - Natriumalginat
- E 402: - Kaliumalginat
- E 403: - Ammoniumalginat
- E 404: - Calciumalginat
- E 405: - Propylenglycolalginat
- E 406: - Agar Agar
- E 407: - Carrgeen, Furcelleran
- E 407: - Johannisbrotkernmehl
- E 412: - Guarkernmehl
- E 413: - Traganth
- E 414: - Gummi arabicum
- E 415: - Xanthan
- E 416: - Karaya (Indischer Traganth)
- E 417: - Tarakernmehl (Peruanisches Johannisbrotkernmehl)
- E 418: - Gellan
- E 440: - Pektin, Opekta
- E 440ii: - Amidiertes Pektin
- E 460: - Mikrokristalline Cellulose, Cellulosepulver
- E 461: - Methylcellulose
- E 462: - Ethylcellulose
- E 463: - Hydroxypropylcellulose
- E 465: - Methylethylcellulose
- E 466: - Carboxymethylcellulose, Natriumcarboxymethylcellulose

### G. Reduktionsmittel

Die Lebensmittel können des Weiteren auch Reduktionsmittel aufweisen. Reduktionsmittel im Sinne der Erfindung sind bevorzugt in Lebensmitteln zulässige Reduktionsmittel, insbesondere die hier genannten:
- E 220: - Schwefeldioxid
- E 221: - Natriumsulfit
- E 222: - Natriumhydrogensulfit
- E 223: - Natriumdisulfit
- E 224: - Kaliumdisulfit
- E 226: - Calciumsulfit
- E 227: - Calciumhydrogensulfit
- E 228: - Kaliumhydrogensulfit
- E 300: - Ascorbinsäure
- E 301: - Natrium-L-Ascorbat
- E 302: - Calium-L-Ascorbat
- E 304: - Ascorbinsäureester
- E 306: - Tocopherol
- E 307: - Alpha-Tocopherol
- E 308: - Gamma-Tocopherol
- E 309: - Delta-Tocopherol
- E 310: - Propylgallat
- E 311: - Octylgallat
- E 312: - Dodecylgallat
- E 315: - Isoascorbinsäure
- E 316: - Natriumisoascorbat
- E 319: - tert.-Butylhydrochinon (TBHQ)
- E 320: - Butylhydroxianisol
- E 321: - Butylhydroxitoluol
- E 322: - Lecithin
- E 330: - Citronensäure
- E 512: - Zinn-II-Chlorid

### H. Geschmacksverstärker

Diese Zubereitungen- wie auch die Aromamischungen- können des Weiteren zusätzliche Aromastoffe zum Verstärken eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines angenehmen Geschmackseindrucks (salzig, Umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 offenbart. Ferner bevorzugt sind Umami-Verbindungen wie in der WO 2008/046895 und EP 1 989 944 beschrieben sind.

Weiterhin können erfindungsgemäß bevorzugte Aromamischungen und Produkte auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-tri-hydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Bevorzugte Aromastoffe sind solche, die einen süßen Geruchseindruck verursachen, wobei der oder die weiteren Aromastoffe, bevorzugt ausgewählt sind aus der Gruppe bestehend aus: Vanillin, Ethylvanillin, Ethylvanillinisobutyrat (= 3 Ethoxy-4-isobutyryloxybenzaldehyd), Furaneol▪ (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäurei-soamylester, 3-Methyl-buttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### I. Wirkstoffe zur Maskierung von unangenehmen Geschmackseindrücken

Weiterhin können die oralen Zubereitungen auch weitere Stoffe umfassen, die ebenfalls zur Maskierung von bitteren und/oder adstringierenden Geschmackseindrücken dienen. Diese weiteren Geschmackskorrigenzien werden z. B. aus der folgenden Liste ausgewählt: Nucleotiden (z.B. Adenosin-5'-monophosphat, Cytidin-5'-monophosphat) oder deren physiologisch akzeptablen Salzen, Lactisolen, Natriumsalzen (z.B. Natriumchlorid, Natriumlactat, Natriumcitrat, Natriumacetat, Natriumgluconoat), Hydroxyflavanonen, dabei bevorzugt Eriodictyol, Sterubin (Eriodictyol-7-methylether), Homoeriodictyol, und deren Natrium-, Kalium-, Calcium-, Magnesium- oder Zinksalzen (insbesondere solche wie beschrieben in EP 1258200 A2, die bezüglich der darin offenbarten entsprechenden Verbindungen auf dem Wege der Verweisung Bestandteil dieser Anmeldung wird), Hydroxybenzoesäureamiden, dabei vorzugsweise 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)-amid-Mono-natriumsalz, 2,4-Dihydroxybenzoesäure-N-2-(4-hydroxy-3-methoxyphenyl)ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamiden (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoinen, dabei vorzugsweise 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon und 1-(2-Hydroxy-4-methoxyphenyl)-2-(4-hydroxy-3-methoxyphenyl)ethanon) (insbesondere solche wie beschrieben in WO 2006/106023 beschrieben, die bezüglich der darin offenbarten entsprechenden Verbindungen auf dem Wege der Verweisung Bestandteil die-ser Anmeldung wird); Hydroxyphenylalkandionen, wie zum Beispiel Gingerdion-[2], Ginger-dion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin of-fenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (ins-besondere solche wie beschrieben in WO 2005/096841, die bezüglich der darin offenbarten entsprechenden Verbindungen auf dem Wege der Verweisung Bestandteil dieser Anmeldung wird); Divanillinen (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie be-schrieben in US 2008/0227867 A1, die bezüglich der darin offenbarten entsprechenden Ver-bindungen auf dem Wege der Verweisung Bestandteil dieser Anmeldung wird), dabei insbe-sondere Phloretin und Davidigenin, Aminosäuren oder Gemische von Molkeproteinen mit Lecithinen, Hesperetin wie in der WO 2007/014879 offenbart, die hinsichtlich dieser Verbin-dungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Pro-penylphenylglycosiden (Chavicolglycosiden) wie in EP 1955601 A1 beschrieben, die hinsicht-lich dieser Verbindungen auf dem Wege der Verweisung Bestandteil dieser Anmeldung wird, oder Extrakten aus Rubus suavissimus, Extrakte aus Hydrangea macrophylla wie in EP 2298084 A1 beschrieben, Pellitorin und abgeleiteten Aromakompositionen wie in EP 2008530 A1 beschrieben, Umami-Verbindungen wie in WO 2008/046895 A1 und EP 1989944 A1 beschrieben, Umami-Verbindungen wie beschrieben in EP 2064959 A1 bzw. EP 2135516 A1, Vanillyllignanen, Enterodiol, sowie N-Decadienoylaminosäuren und deren Gemische.

### J. Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 Propylgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### K. Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen.

Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### L. Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentische Farbstoffe sind synthetische Nachbildungen von in der Natur vorkommenden, färbenden Substanzen. Geeignete Farbstoffe für den Einsatz in der vorlie-genden Zusammensetzung sind ausgewählt aus:
Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

### M. Süßstoffe

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch
- synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### BEISPIELE

### Beispiel 1

### (a) Herstellung der Sauermilch basierenden Zubereitung

68.2 Gew.-% Magermilch mit einem Fettgehalt von ca. 0.1% und 29.8 Gew.% Sahne mit einem Fettgehalt von 34 % sowie 2 Gew.% native Stärke (Novation Endura 0100) werden im Mischer 60 Minuten gerührt. Dann wird auf 65°C erwärmt und mit einem Druck von 30/5 bar homogenisiert. Die Erhitzung erfolgt bei 95°C mit einer Heißhaltung von 360 s. Anschließen wird auf 40°C abgekühlt. Dann wird das Gemisch mit 0.01 Gew.% Bakterienkultur F-DVS YoFlex® Creamy 1.0 (der Firma CHR Hansen) beimpft und im Wärmeschrank bei 37°C bebrütet bis ein pH < 4,6 erreicht ist.

### (b) Aufbringen der auf gesäuerter Milch basierende Zubereitung auf Pizzateig

Die in a) hergestellt Zubereitung wird evtl. noch mit weiteren Gewürzen versetzt (siehe unten stehende Tabelle 1) und auf Pizzaboden aufgebracht. Es erfolgte eine optische und sensorische Bewertung der Zubereitung in ungebackenen und gebackenen Zustand des Pizzateigs. Ebenso erfolgte eine Bewertung der Gefrier-Tau-Stabilität der Soße, indem
A) 50 g Probe in einem Probengefäß bei -18 °C eingefroren wurden. Am folgenden Tag bei Kühlschranktemperatur (+ 4°C) aufgetaut wurde und anschließend Aussehen und Serumlässigkeit beurteilt wurde.
B) 50 g Soße auf einen Pizzateig gegeben wurde und anschließend bei -18°C eingefroren wurde. Vor dem Abbacken wurde Aussehen und Struktur bewertet.

Die Ergebnisse sind aus den **Tabellen 1 und 2** zu entnehmen.

Die Gefrier-Tau-Stabilität vom Pizzateig mit der erfindungsgemäßen auf gesäuerter Milch basierenden Zubereitung wurde wie folgt bewertet:
1 = sehr gute Stabilität
2 = gute Stabilität
3= ausreichende Stabilität
4 = nicht ausreichende Stabilität

**Tabelle 1**

| Hergestellte Zubereitungen (GTS = Gefrier-Tau-Stabilität) | | | | | |
|---|---|---|---|---|---|
| **Bsp.** | **Bakterienkultur** | **Stabilisierung** | **Gewürze** | **Optik** | **GTS** |
| A | 0,01% Thermophile YoFlex® Kultur | - | - | Krümelig, gebrochen | 4 |
| B* | 0,01% Thermophile YoFlex® Kultur | 3% HAMULSION RUK | - | Glatt | 1 |
| C | 0,01% Thermophile YoFlex® Kultur | 3% Novation Endura 3300 | - | Etwas krümelig, Serum | 2 |
| D | 0,01% Thermophile YoFlex® Kultur | 3% Novation Endura 0100 | - | Etwas krümelig, Serum | 2 |
| E | 0,01% Thermophile YoFlex® Kultur | 2% Novation Endura 0100 | 3% Würzmischung 1 | etwas krümelig, geringfügig Serum | 2 |
| G | 0,01% Thermophile YoFlex® Kultur | 3% Novation Endura 3300 | 3% Würzmischung 1 | Serum, teilweise geliert | 2 |
| H | 0,01% Thermophile YoFlex® Kultur | 3% Novation Endura 3300 | 4% Würzmischung 1 | Serum, teilweise geliert | 1 |
| I | 0,01% Thermophile YoFlex® Kultur | 3% Novation Endura 3300 | 4% Würzmischung 2 | Serum, teilweise geliert | 1 |
| J | 0,01% Thermophile YoFlex® Kultur | 3% Novation Endura 3300 | 5% Cheese Powder Creemo 470006 | Serum, zu geringen Teilen geliert | 1 |
| K | 0,01% Thermophile YoFlex® Kultur | 3% Novation Endura 3300 | 5% Cheese Powder Creemo 4700644 | Serum, krümelig | 2 |
| L | 0,01% Thermophile YoFlex® Kultur | 2% Novation Endura 0100 | - | Serum, teilweise geliert | 1 |
| M | 0,01% Thermophile YoFlex® Kultur | 2% Novation Endura 0100 | 5% Cheese Powder Creemo 4700522 | Serum, teilweise geliert | 1 |
| N | 0,01% Thermophile YoFlex® Kultur | 2% Novation Endura 0100 | 5% Cheese Powder Creemo 4700644 | Serum, angeliert | 1 |

| | | | | | |
|---|---|---|---|---|---|
| * nicht erfindungsgemäß Würzmischung 1: Wasser, Gewürze, Meersalz, Zitronensaft (aus Zitronensaftkonzentrat), Verdickungsmittel E415, Zwiebelgranulat, weitere Gewürze: Knoblauch, Pfeffer, Pastinake Würzmischung 2: basierend auf 718 mit Zwiebelpulver (feinere Zwiebel), höherer Knoblauchanteil Cheese Powder Cremo 4700522 und Cheese Powder Cremo 4700644 der Firma Kerry Ingredients & Flavours. Novation EnduraTM 0100 und Novation Endura TM 3300 von Ingredion. Thermophile YoFlex® Kulturen: F-DVS YoFlex® Mild 2.0 oder F-DVS YoFlex® Creamy 1.0 der Firma CHR Hansen. | | | | | |

### Sensorische Bewertung

Die Zubereitung wurde vor dem Backen und nach dem Backen verkostet. Die Ergebnisse sind in **Tabelle 2** wiedergegeben.

**Tabelle 2**

| Sensorische Bewertung der hergestellten Sauermilch basierende Zubereitungen auf Pizzateig | | | | |
|---|---|---|---|---|
| **Bsp.** | **Ungebacken** | | **Auf Pizza gebacken** | |
| | **Optik** | **Mundgefühl** | **Optik** | **Geschmack und Mundgefühl** |
| A | glatt | Wenig Geschmack | Nicht ausreichend | Krümelig, trocken, muffig |
| B* | glatt | Sehr voll Pektingeschmack | Sehr gut | Massig, fest, volumnnös, trocken |
| C | glatt | Frisch, nicht muffig | Sehr gut | Massig, fest, voluminös |
| D | glatt | Cremig, nicht muffig | Sehr gut | Massig, fest, voluminös |
| E | glatt | Etwas Zwiebel, etwas Pfeffer | Sehr gut | Etwas Zwiebel, etwas Pfeffer |
| G | glatt | Pfeffer und Zwiebel zu erkennen | Sehr gut | Pfeffer und Zwiebel zu erkennen |
| H | glatt | Pfeffer und Zwiebel zu erkennen | Sehr gut | Angehnehmer Zwiebel- und Pfeffer-Geschmack |
| I | glatt | Pfeffer und Zwiebel zu erkennen | gut | Pfeffer und Zwiebel zu erkennen |
| J | Glatt | Geringer Käsegeschmack | Sehr gut | Geringer Käsegeschmack |
| K | glatt | Cheddar-Geschmack gut erkennbar | Sehr gut | Cheddar-Geschmack gut erkennbar |
| L | glatt | Voll, cremig | Sehr gut | voluminös |
| M | glatt | Emmentaler-Geschmack gut zu erkennen | Sehr gut | Emmentaler-Geschmack gut zu erkennen |
| N | glatt | Cheddar-Geschmack gut zu erkennen | Sehr gut | Cheddar-Geschmack gut zu erkennen |

| | | | | |
|---|---|---|---|---|
| * nicht erfindungsgemäß | | | | |

### Beispiele 2: Pizzaformulierungen

### 2.1. Formulierungen mit Muster L

| | | | **Dosage (%)** | **Zielmenge (g)** | **Einwaage Muster (g)** | **Einwaage Soße (g)** |
|---|---|---|---|---|---|---|
| **Muster** | **Muster-Nr.** | **Bezeichnung** | | | | |
| **PLAIN (Ohne zusätzlichen Geschmack)** | | | | | | |
| | **L/0** | Pizza Soße Weiß | / | 1000 | / | 1000 |
| | | | | | | |

| **EXOTISCH** | | | | | | |
|---|---|---|---|---|---|---|
| **Exotisch Asia** | | | | | | |
| | L/1 | Asia LC | 8 | 1000 | 80 | 920 |
| | L/2 | fruchtiges Curry LC | 15 | 1000 | 150 | 850 |
| | L/3 | Thai LC/Chilie LC | 8 | 1000 | 80 | 920 |

| **Exotisch Scharf/Würzig** | | | | | | |
|---|---|---|---|---|---|---|
| | L/4 | Pfeffer LC | 8 | 1000 | 80 | 920 |
| | L/5 | Chilie LC | 8 | 1000 | 80 | 920 |
| | L/6 | Pfeffer + Zitrone | 8 | 1000 | 80 | 920 |
| | L/7 | Pfeffer + Zitrone (höhere Schär | 8 | 1000 | 80 | 920 |
| | L/8 | Paprika geräuchert | 8 | 1000 | 80 | 920 |

| **Exotisch Südamerika** | | | | | | |
|---|---|---|---|---|---|---|
| | L/9 | Chimichuri (trocken) | 4 | 500 | 20 | 480 |
| | L/10 | Guacamole | 8 | 500 | 40 | 460 |
| | | | | | | |

| **PIZZAWÜRZIG** | | | | | | |
|---|---|---|---|---|---|---|
| | L/11 | Würzig LC, Zwiebel Pfeffer | 3 | 500 | 15 | 485 |

| **KRÄUTER** | | | | | | |
|---|---|---|---|---|---|---|
| | L/12 | Würzig & Kräuter LC | 3 | 500 | 15 | 485 |
| | L/13 | Würzig & Kräuter LC | 3 | 500 | 15 | 485 |
| | L/14 | Schnittlauch Petersile LC HF | 6 | 500 | 30 | 470 |
| | L/15 | Mediterrane Kräuter LC HF | 6 | 500 | 30 | 470 |

### 2.2. Formulierungen mit Muster M

| | | | **Dosage (%)** | **Zielmenge (g)** | **Einwaage Muster (g)** | **Einwaage Soße (g)** |
|---|---|---|---|---|---|---|
| **Muster** | **Muster -Nr.** | **Bezeichnung** | | | | |
| | | | | | | |

| **NUR KÄSE-EMMENTALER** | | | | | | |
|---|---|---|---|---|---|---|
| | **M/0** | Emmentaler Pizza Soße Weiß | / | 1000 | / | 1000 |

| **EXOTISCH** | | | | | | |
|---|---|---|---|---|---|---|
| **Exotisch Asia** | | | | | | |
| | M/1 | Asia LC | 8 | 500 | 40 | 460 |
| | M/2 | fruchtiges Curry LC | 15 | 500 | 75 | 425 |
| | M/3 | Thai LC/Chilie LC | 8 | 500 | 40 | 460 |

| **Exotisch Scharf/Würzig** | | | | | | |
|---|---|---|---|---|---|---|
| | M/4 | Pfeffer LC | 8 | 500 | 40 | 460 |
| | M/5 | Chilie LC | 8 | 500 | 40 | 460 |
| | M/6 | Pfeffer + Zitrone | 8 | 500 | 40 | 460 |
| | M/7 | Pfeffer + Zitrone (höhere Schär | 8 | 500 | 40 | 460 |
| | 52/8 | Paprika geräuchert | 8 | 500 | 40 | 460 |

| **Exotisch Südamerika** | | | | | | |
|---|---|---|---|---|---|---|
| | M/9 | Chimichuri (trocken) | 4 | 500 | 20 | 480 |
| | M/10 | Guacamole | 8 | 500 | 40 | 460 |
| | | | | | | |

| **PIZZAWÜRZIG** | | | | | | |
|---|---|---|---|---|---|---|
| | M/11 | Würzig LC, Zwiebel Pfeffer | 3 | 1000 | 30 | 970 |
| | | | | | | |

| **KRÄUTER** | | | | | | |
|---|---|---|---|---|---|---|
| | M/12 | Würzig & Kräuter LC | 3 | 500 | 15 | 485 |
| | M/13 | Würzig & Kräuter LC | 3 | 500 | 15 | 485 |
| | M/14 | Schnittlauch Petersile LC HF | 6 | 500 | 30 | 470 |
| | M/15 | Mediterrane Kräuter LC HF | 6 | 500 | 30 | 470 |

### 2.3. Formulierungen mit Muster N

| | | | **Dosage (%)** | **Zielmenge (g)** | **Einwaage Muster (g)** | **Einwaage Soße (g)** |
|---|---|---|---|---|---|---|
| **Muster** | | **Bezeichnung** | | | | |
| **NUR KÄSE-CHEDDAR** | | | | | | |
| | **N/0** | Cheddar Pizza Soße Weiß | / | 1000 | / | 1000 |

| **EXOTISCH** | | | | | | |
|---|---|---|---|---|---|---|
| **Exotisch Asia** | | | | | | |
| | N/1 | Asia LC | 8 | 500 | 40 | 460 |
| | N/2 | fruchtiges Curry LC | 15 | 500 | 75 | 425 |
| | N/3 | Thai LC/Chilie LC | 8 | 500 | 40 | 460 |

| **Exotisch Scharf/Würzig** | | | | | | |
|---|---|---|---|---|---|---|
| | N/4 | Pfeffer LC | 8 | 500 | 40 | 460 |
| | N/5 | Chilie LC | 8 | 500 | 40 | 460 |
| | N/6 | Pfeffer + Zitrone | 8 | 500 | 40 | 460 |
| | N/7 | Pfeffer + Zitrone (höhere Schär | 8 | 500 | 40 | 460 |
| | N/8 | Paprika geräuchert | 8 | 500 | 40 | 460 |

| **Exotisch Südamerika** | | | | | | |
|---|---|---|---|---|---|---|
| | N/9 | Chimichuri (trocken) | 4 | 500 | 20 | 480 |
| | N/10 | Guacamole | 8 | 500 | 40 | 460 |
| | | | | | | |

| **PIZZAWÜRZIG** | | | | | | |
|---|---|---|---|---|---|---|
| | N/11 | Würzig LC, Zwiebel Pfeffer | 3 | 1000 | 30 | 970 |
| | | | | | | |

| **KRÄUTER** | | | | | | |
|---|---|---|---|---|---|---|
| | N/12 | Würzig & Kräuter LC | 3 | 500 | 15 | 485 |
| | N/13 | Würzig & Kräuter LC | 3 | 500 | 15 | 485 |
| | N/14 | Schnittlauch Petersile LC HF | 6 | 500 | 30 | 470 |
| | N/15 | Mediterrane Kräuter LC HF | 6 | 500 | 30 | 470 |

### Beispiel 3: Gesäuertes Milcherzeugnis als Dip bzw. Brotaufstrich (nicht erfindungsgemäß)

Alle Komponenten in der Tabelle 3 werden zusammengemischt (>10 °C) und zu einer homogenen Masse verrührt.

| Muster | Speisequark Magerstufe | erfindungsgemäßes gesäuertes Milcherzeugnis | Kräuter* | Wasser | Salz |
|---|---|---|---|---|---|
| O | 69 Gew.% | 29 Gew.% | 0.5 Gew.% | 0.8 Gew.% | 0.7 Gew.% |
| P | 55 Gew.% | 43.5 Gew.% | 0.3 Gew.% | 0.5 Gew.% | 0.7 Gew.% |

| | | | | | |
|---|---|---|---|---|---|
| *Kräuter: Mischung aus Petersilie, Meerrettich, Zwiebel, Schnittlauch | | | | | |

## Patentansprüche

1. Verfahren zur Herstellung von Tiefkühlpizza, wobei im ersten Schritt
(i) der Teig bereitgestellt wird, und dann
(ii) ein gesäuertes Milcherzeugnis aus:
(a) 30 bis 80 Gew.% Milch,
(b) 5 bis 80 Gew.% Sahne,
(c) 0.5 bis 4 Gew.% Stärke und
(d) 0.001 bis 0.1 Gew.-% mesophile Milchsäurebakterien und/oder thermophile Milchsäurebakterien,
mit der Maßgabe, dass sich die Komponenten (a) bis (d) zu 100 Gew.% addieren, den fertigen Teig aufgebracht wird, und das gesäuerte Milcherzeugnis dadurch erhältlich ist, dass man
(1) Milch, Sahne und Stärke in einem Mischer rührt, die Mischung auf 50 °C bis 95 °C erwärmt und unter Druck homogenisiert, wobei der Homogenisierungsschritt eine 2-stufige Homogenisierung ist, wobei die erste Stufe bei einem Druck von 15 bis 30 bar und die zweite Stufe bei einem Druck von 2 bis 10 bar durchführt wird, und anschließend auf 80 °C bis 120 °C und eine Heißhaltezeit von 300 bis 500 Sekunden erhitzt,
(2) die so erhaltene Mischung nach Abkühlen auf 30°C bis 50°C mit Milchsäurekulturen beimpft und bei einem geeigneten Temperaturbereich bebrütet bis ein pH-Wert < 4,6 erreicht wird, wobei als Milchsäurekulturen mesophile und / oder thermophile Milchsäurekulturen eingesetzt werden und die so erhaltene gesäuerte Milchgrundmasse nicht mehr als 20% Gesamtfettgehalt aufweist,
und dann
(iii) der Teig mit dem gesäuerten Milcherzeugnis im Backofen vorgebacken wird, und anschließend
(iv) optional mit weiteren Zutaten belegt und
(v) schockgefroren wird.

2. Verfahren nach dem Anspruch 1, **dadurch gekennzeichnet, dass** man die Mischung des Schrittes (1) nach der Homogenisierung auf 90 °C bis 110 °C erhitzt, wobei die Heißhaltezeit 340 bis 450 Sekunden beträgt.

3. Verfahren nach mindestens einem der Ansprüche 1 bis 2, **dadurch gekennzeichnet, dass** im Schritt (2) bei einer Temperatur im Bereich 30 bis 45 °C für 24 Stunden bebrütet wird.

## Claims

1. Method of production of frozen pizza, wherein in the first step
(i) the dough is prepared, and then
(ii) an acidified milk product made from
(a) 30 to 80 wt % milk,
(b) 5 to 80 wt % cream,
(c) 0.5 to 4 wt % starch and
(d) 0.001 to 0.1 wt % of mesophilic lactic acid bacteria and/or thermophilic lactic acid bacteria,
with the proviso that components (a) to (d) add up to 100 wt %,
is applied on the prepared dough, and the acidified milk product is obtainable by
(1) Stirring milk, cream and starch in a mixing bowl, the mixture is heated to 50 °C to 95 °C and homogenized under pressure, wherein the homogenization step is a 2-stage homogenization, wherein the first stage is performed at a pressure of 15 to 30 bar and the second stage is performed at 2 to 10 bar, and then heated to 80 °C to 120 °C and held at this temperature for 300 s to 500 seconds,
(2) Inoculating the such obtained mixture with lactic acid cultures after cooling to 30 °C to 50 °C and incubating in a suitable temperature range until pH<4.6 is reached, wherein as lactic acid cultures mesophilic and/or thermophilic lactic acid cultures are used and the such obtained acidified milk base mass has no more than 20% total fat content,
and then
(iii) the dough with the acidified milk product is pre-baked in the baking oven, and then
(iv) optionally further ingredients are applied and
(v) it is quick-frozen.

2. Method according to claim 1, wherein the mixture of step (1) after the homogenization is heated to 90 °C to 110 °C and held at this temperature for 340 to 450 seconds.

3. The method according to at least one of claims 1 to 2, **characterized in** step (2) incubation is carried out at a temperature in the range 30 to 45 °C for 24 hours.

## Revendications

1. Procédé de production de pizza congelée, dans lequel, dans la première étape
(i) la pâte est préparée, et ensuite
(ii) un produit laitier acidifié :
(a) 30 à 80 % en poids de lait,
(b) 5 à 80 % en poids de crème,
(c) 0,5 à 4 % en poids d'amidon et
(d) 0,001 à 0,1 % en poids de bactéries lactiques mésophiles et/ou de bactéries lactiques thermophiles,
à condition que la somme des composants a) à d) soit égale à 100 % en poids, est appliquée à la pâte finie et le produit laitier acidifié peut être obtenu par
1) agiter le lait, la crème et l'amidon dans un mélangeur, chauffer le mélange à 50°C à 95°C et l'homogénéiser sous pression, l'étape d'homogénéisation étant une homogénéisation en deux étapes, la première étape étant effectuée à une pression de 15 à 30 bars et la seconde à une pression de 2 à 10 bars, puis chauffer à 80°C à 120°C et un temps de rétention de la chaleur de 300 à 500 secondes,
2) l'inoculation du mélange ainsi obtenu avec des cultures d'acide lactique après refroidissement à 30°C à 50°C et incubation dans une plage de température appropriée jusqu'à ce qu'un pH < 4,6 soit atteint, en utilisant des cultures d'acide lactique mésophiles et/ou thermophiles comme cultures d'acide lactique et la base lactique acidifiée ainsi obtenue ayant une teneur totale en matière grasse ne dépassant pas 20%, puis
iii) la pâte contenant le produit laitier acidifié est précuite au four, puis
(iv) éventuellement complétée par d'autres ingrédients ; et
(v) choc gelé.

2. Le procédé selon la revendication 1, **caractérisé en ce que** le mélange de l'étape (1) est chauffé à 90°C à 110°C après homogénéisation, le temps de rétention de la chaleur étant de 340 à 450 secondes.

3. Le procédé selon au moins une des revendications 1 à 2, **caractérisé en ce que** dans l'étape (ii), l'incubation est effectuée à une température comprise entre 30 et 45°C pendant 24 heures.
